# EUROPEAN PATENT APPLICATION

(11) **EP 2 141 777 A1**
(43) Date of publication of application: **06.01.2010**
(21) Application number: 08159573.8
(22) Date of filing: 03.07.2008
(51) Int. Cl.: H01R 13/52

(54) **Seat connection system**

(71) Applicant: Yazaki Europe Ltd., Hemel Hempstead, Hertfordshire HP2 7AU (GB)
(72) Inventor: Rayat, Narpal Singh, Hertfordshire HP2 7AU (GB)
(74) Representative: Haley, Stephen

(57) **Abstract**

An electrical connection system comprising a harness (9) having a connector (10) provided at a first end; and a receptacle (11) arranged to accept the connector, wherein a second end of the harness is arranged to be connected, in use, to electrical components (2) on a vehicle seat; the receptacle is located, in use, on a vehicle body; and the harness is arranged, in use, to connect the vehicle seat to the vehicle body.

## Description

This invention generally relates to the connection of a harness to a receptacle in a seat connection system, in particular when connecting electrical components, which are usually located underneath or on the side of a vehicle seat, to the main vehicle electrical system when the receptacle is located in the floor under the vehicle seat.

Vehicle seats are usually fitted into a vehicle whilst the vehicle is on an assembly line. However, installing a vehicle seat with electrical components in this manner is an awkward operation because of the location of the electrical components and their necessary electrical connections, as well as the risk of the electrical connections themselves becoming damaged in the process.

Generally, a vehicle on an assembly line is fitted with a bundle of electrical wires called a floor harness, or body harness, that is usually installed under the interior carpet, and sometimes also under the interior floor of the vehicle, for carrying electrical power throughout the vehicle. Generally, a portion of the wire harness is brought up from the body harness through a hole in the vehicle's interior floor for the installation of a car seat. Prior to connection, this small section of harness is usually left lying on the floor of the vehicle, ready to connect to a seat once it has been installed.

However, installing a seat and then making the connection with the short harness from the floor to a receptacle located under the seat is generally a blind operation due to the fact that an operator cannot easily see under a seat, if at all, once the seat is in place.

A further problem with the method of connecting the wire harness to a seat as described above is that, while waiting for the seat to be installed, the wire harness is often stepped on, kicked, squashed, damaged and gets dirty because it is not fully protected other than, occasionally, a temporary method such as taping around the bundle.

The object of this invention is, therefore, to provide an improved method of connecting a seat to the main body wire harness.

According to the present invention there is provided an electrical connection system comprising: a harness having a connector provided at a first end; and a receptacle arranged to accept the connector, wherein a second end of the harness is connected, in use, to electrical components on a vehicle seat; the receptacle is located, in use, on a vehicle body; and the harness is arranged, in use, to connect the vehicle seat to the vehicle body.

The present invention therefore provides an electrical connection system from a vehicle electrical system to a seat, the connection system comprising of a short harness with a direct connection to the components of the seat. The harness has a connector on the end of it for the connection to a recipient connector, which is usually located on the vehicle floor under the seat, although this connection point could also be from various points around the seat area.

A seat module, preferably positioned on the underside of the seat, may comprise the electrical components, the module providing control of all of the seat functions, such as movement, heating, etc. The module would ideally be mounted to the seat and similarly connected to the receptacle via a wire harness. The use of such a module would also allow the use of other wire technologies, such as flat wire.

Due to the likelihood of an installed seat being moved backwards, forwards, up and down many times during its lifetime, the integrity of the electrical connection is important, especially where there is linear motion.

Accordingly, particular protective methods are to be employed around the wire harness connecting the seat to the receptacle. For example, a flat corrugated tube, perhaps in an oval shape, may be used to protect the wire harness. The corrugated tube would preferably have rigid sides to limit the side-to-side (x-axis) movement, whilst allowing forward and backward (y-axis) movement and up and down movement (z-axis), relative to the vehicle floor.

A caterpillar like tube/casing system could also be used, which would allow the same movement as the flat corrugated tube system. However, this would be a much more rigid system, making the corrugated tube a more favourable solution. More flexible 3D caterpillar systems are available, however, although these come at a greater cost.

Furthermore, on the assembly line, the floor receptacle, which is preferably fixed in place when the main body harness is put in place, will have a plastic cover, to protect it from the operator/assembler accidentally stepping on it. The cover may be hinged so when the seat arrives to be fitted, the cover can be opened and the seat harness can be directly connected to the floor connector in one simple and easy operation. Alternatively the plastic cover may not be hinged and could be removable instead, just before the connection is made, which would ensure that there was no mechanical interference between the cover and the corrugated tube.

The principle behind the quick connection system is to use a new connector concept which has small magnetic strips on one or more sides of the connector, and as the top mating part is guided down and aligns the pins and cavities, using the specially built in guides, the magnetic strips connect and the connection is complete. Additionally, for a more secure connection, locking clips can be employed to hold the connector in place.

The connector mating should be easy to perform and can be a one handed operation, which is a further advantage of the system.

The present invention also eliminates the above-described blind operation by allowing for the connection to be made prior to the seat being put into its final fixing position.

An example of the present invention will now be described with reference to accompanying drawings, in which:
Figure 1 shows an example of a prior art seat connection system;
Figure 2 shows an example of the present invention;
Figure 3 shows a vehicle seat with components housed on the under side of the seat, and also an example of a module unit where the harness is fixed at the side of the seat and comes down to the connection on the floor;
Figure 4A shows an example of a round corrugated tube, for protecting the wire harness under a seat;
Figure 4B shows an alternative oval corrugated tube to Figure 4A;
Figure 4C shows an example of a caterpillar tube system, which allows similar movement to that of the corrugated tube of Figure 4B;
Figure 5 shows a detailed view of the connector and the receptacle of Figure 2;
Figure 6 shows a side on view of the connector of Figure 5; and
Figure 7 shows how a receptacle, which is connected to the body harness of a vehicle, is secured in the vehicle floor.

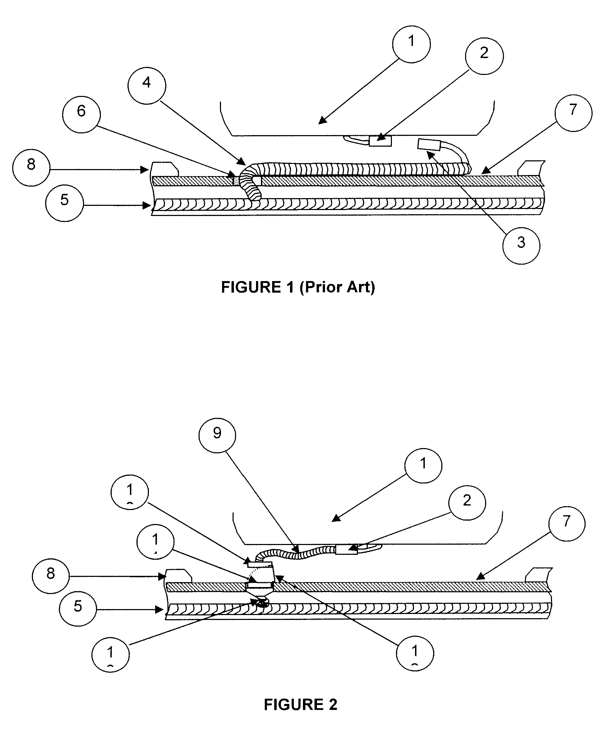

Referring to the figures in detail, Figure 1 is an example of a seat connection system of the prior art. Here the electronic components 2 on a seat 1 are connected to the main vehicle electrical system 5 via a seat harness 4, the harness connector 3 mating with the electrical seat components 2 on the underside of the seat 1 and the other end of the harness 4 originating at the main vehicle electronics harness 5 and passing through a hole 6 provided in the interior floor 7 of the vehicle body 8.

Figure 2 is a preferred embodiment of the present invention, whereby a seat harness 9 originates from the electrical seat components 2 located, in this embodiment, underneath the seat 1, although they could be located elsewhere on the seat 1 if required. The end of the harness 9 unattached to the seat components 2 is provided with a seat connector 10, which is arranged to mate with a receptacle 11 located in the interior floor 7 of the vehicle body 8. When not in use, the receptacle 11 is protected by a cover 12, which may be hinged to the vehicle floor 7 as is the case in the preferred embodiment. The receptacle 11 itself is connected to the main vehicle electrical system 5 by way of a receptacle harness 13.

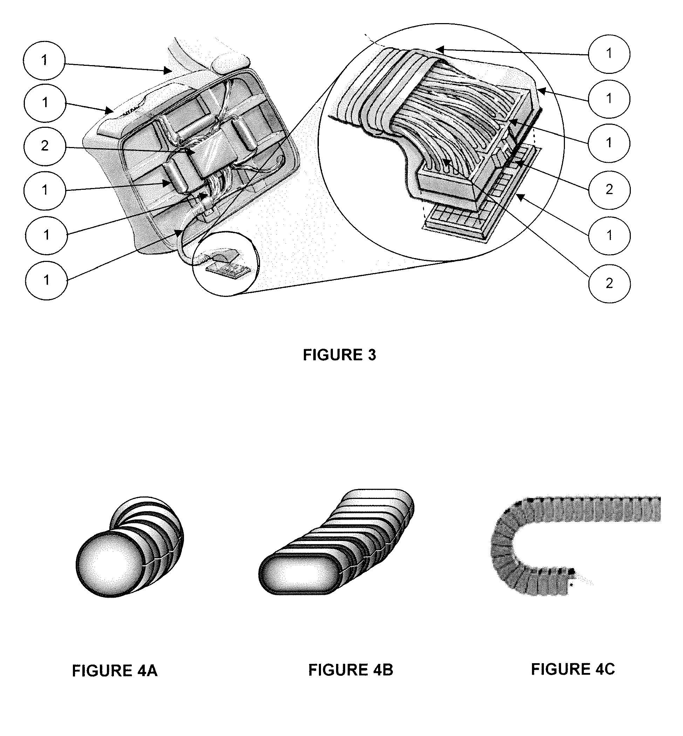

Figure 3 shows the underside of a seat 1 having electrical components 2 and motors 15 attached to the underside of the seat 1 with the seat harness 9 being electrically connected to the components 2 and motors 15 at one end with the other end having a connector 10 fitted. The electrical components 2 may be contained within a seat module (not shown). A switch pack 14, which control the components 2 and motors 15 can be seen located on the side of the seat 14. Of course, it will be appreciated that the switch pack 14 could be located elsewhere in the vehicle.

The seat harness 9 comprises electrical wires 21, which connect to the various components 2 underneath a seat 1. The wires 21 are generally covered by protective plastic corrugated tubing 17, as shown in Figure 3, examples of which are shown in Figures 4A, 4B and 4C.

The preferred corrugated tubing 17, used to protect the wires 21, is the substantially flat, oval shaped, corrugated tubing illustrated in Figure 4B, which limits movement side to side whilst allowing movement both in a vertical plane (z-axis) and forwards and backwards (y-axis). It will be recognised that the wire harness and corrugated tubing that connect the seat to the receptacle should be of sufficient length to allow such movements. The substantially flat corrugated tubing is preferable to the round corrugated tubing illustrated in Figure 4A. The reason for this is that the round corrugated tubing, although similar to the flat corrugated tubing, allows movement in all directions, which is not usually desirable in this intended application.

Of course, it will be recognized that other designs and materials may be used to protect the wire seat harness. For example, Figure 4C is an illustration of a caterpillar tube system, which allows similar movement to that of the corrugated tube of Figure 4B, but provides a much more rigid system.

In the preferred embodiment, the harness is secured to the seat 1 by a bracket 16 to reduce excessive movement and pulling of the harness, thereby preventing damage, which could otherwise occur to the electrical wires 21, for example if the seat 1 was moved. The protective corrugated tubing 17 does not extend the full length of the wires 21 it is covering past the bracket 16, but instead terminates at a point where the seat harness 9 is secured to the underneath of the seat 1.

As mentioned before, the seat harness 9 has a connector 10 provided at the unsecured end of the seat harness 9. To be more specific, the electrical wires 21, which are connected to the components 2 and motors 15 underneath the seat 1, terminate in a connector 10 at the unsecured end of the seat harness 9. The seat connector 10 has a housing, which encloses, and hence secures, an end of the corrugated tubing 17, thereby preventing any stress on the electrical wires 21.

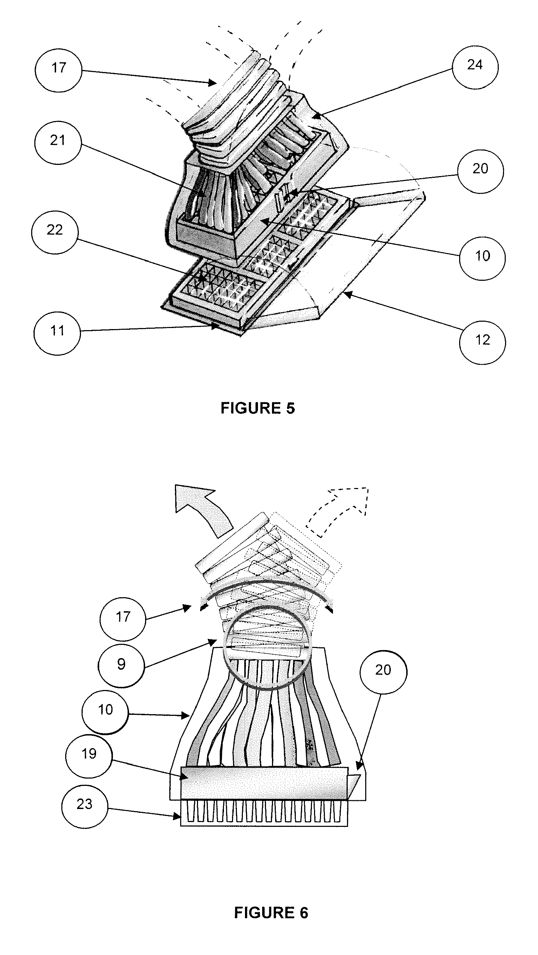

The preferred embodiment is shown in Figure 5 and 6, where the corrugated tubing 17 enters the connector 10 vertically above the connector face 22. An alternative design can be seen in the example shown in Figure 3, where the connector 10 curves over so that the connector mouth is at an angle approximately 90 degrees from the connector face 22.

The connector 10 may be comprised of a number of smaller multi-connector blocks 19, thereby making the connector 10 modular, as in the preferred embodiment. The wires 21 extend into the connector housing 24 and terminate in one or more connector blocks 19. Accordingly, none of the wires 21 are exposed between the harness bracket 16 and the connector 10, as can be seen in the enlarged view of Figure 3, showing a transparent view of a connector 10 mating with a receptacle 11.

A connector 10 is, preferably, provided with male terminals 23, which mate with female cavities 22 provided in the receptacle 11 when the two are brought together. This arrangement helps to prevent damage which could otherwise occur if the receptacle 11 is kicked or stepped on before the seat 1 is installed. However, it will be appreciated that the alternative arrangement is also possible, with the receptacle 11 having male terminals and the connector 10 having female cavities.

The connector 10 can comprise as little or as many wires 21 as are required. Generally, and in the preferred embodiment, each of the wires 21 is electrically connected to a male terminal 23. When the connector 10 mates with the receptacle 11, the male terminals 23 align with the female cavities 22 provided in the receptacle 11 to receive them. The female cavities 22 can be seen illustrated in the receptacle 11 shown in Figure 5, which also illustrates an embodiment wherein the corrugated tubing 17 exits from the top of the connector 10, which allows better movement when the seat is moved backwards or forwards.

In Figure 5, the connector 10 is shown fitting into a receptacle 11 having a hinged cover 12 to protect the receptacle from getting damaged until mating of the connector 10 and the receptacle 11 takes place. Of course, it will be appreciated that the receptacle cover could also be removable rather than hinged, as mentioned previously.

The receptacle 11, which is preferably fixed to the vehicle floor 7 of the vehicle body 8, has a protective cover 12 which acts to prevent the receptacle from getting dirty or damaged before the seat is installed. Once the connector 10 has mated with the receptacle 11, the protective cover 12 could be used to secure the connection and keep the seat harness 9 stable from potential disconnection caused, for example, by vehicle vibration or seat 1 movement.

In the preferred embodiment, the connector 10 is provided with a locking lug 20 attached to a connector block 19 for securing the connector 10 to the receptacle 11, once the two have been mated together. The locking lug 20 is illustrated in Figure 3.

Another method of securing the connection would be to provide the receptacle cover 12 with a magnetic top edge to magnetically secure the connector 10 in place. A further alternative arrangement could be for the connector 10 to be magnetic, within the surrounding area around the receptacle 11, thereby using magnetic force to secured the harness connector 10 to the receptacle 11 in one easy step.

The seat harness 9 has two-degrees of movement, as illustrated in Figure 6, which shows a side view of the connector 10, due to the design of the flat corrugated tubing 17, which protects the wires 21.

The seat harness 9 can move in the y-axis, i.e. backwards and forwards, which prevents any damage to the harness if the seat 1 it is connected to is moved backwards and forwards on it's runners (not shown) once installed in the vehicle.

The seat harness 9 can also be moved in the z-axis, i.e. vertically, with respect to the vehicle floor 7, which allows the seat harness 9 to be connected to the receptacle 11 when the seat 1 is initially installed in the vehicle.

The design of the flat corrugated tubing 17 restricts the seat harness from moving in the x-axis, i.e. sideways. The receptacle 11 is positioned, preferably in the vehicle floor 7, accordingly.

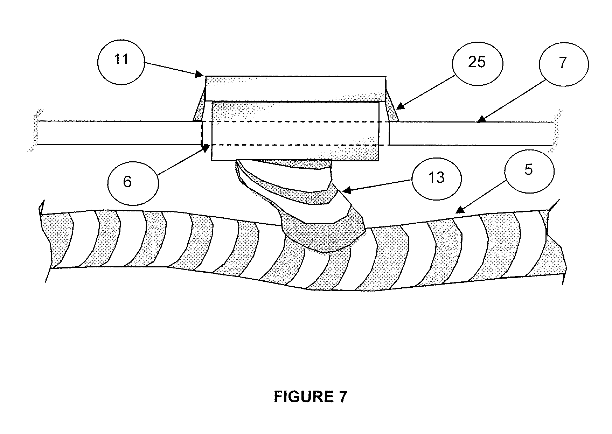

Figure 7 shows a receptacle 11, which is fixed to the vehicle floor 7 at the same time the floor harness is installed. A preferred method of installing the receptacle 11 is to push it through a hole 6 provided for it in the vehicle floor 7 so that fixing tabs 25 can expand, sitting on the surface of the vehicle floor 7 and securing the receptacle 11 in place.

In the preferred embodiment, an advantage is that the connection between the connector 10 and the receptacle 11 is self-aligning. The receptacle 11 is provided with a tapered edge and the connector 10 is provided with an outer housing 24 surrounding the connector block(s) 19. When connecting the connector 10 to the receptacle 11, a connecting block 19 aligns with the tapered edge of the receptacle 11, thus aligning the connector 10 with the receptacle 11 correctly, thereby allowing the connector housing to fit neatly over the receptacle 11, protecting it.

The receptacle 11 is preferably provided with locking clips (not shown) to hold the connector 10 in place. These locking clips are preferably of the flexible locking type, an example of which will now be described, wherein the connector 10 housing slides inside the receptacle 11 and the locking lug 20 protruding from the surface of the connector 10 fits into the locking clip on the receptacle 11 arranged to receive it, thereby securing the connector 10 to the receptacle 11. To release the clip, the locking lug 20 is withdrawn from the locking clip in the receptacle 11, which allows the connector 10 to be withdrawn.

Another possible means to secure the connection in place could be a magnetic connection, for example magnetic strips could be provided on one or more sides of the connector 10, which, once the connector 10 had mated with the receptacle 11, would then secure the connection in place.

Another possible way of securing the connector 10 in place could be for the hinged/removable receptacle cover 12 being provided with a means for securing the connection. For example, the receptacle cover 12 could be provided with a magnetic strip along the top of its inner side and when the connector 10 is mated to the receptacle 11, the magnetic strip provided on the receptacle cover 12 would then act to secure the cover against the connector housing 24, thereby securing the connection in place.

Another possible connector type is a low insertion force connector, which allows a lever to lock the connector in place once positioned.

Of course, it will be appreciated that there are other methods of securing a receptacle cover 12 to the connector housing 24, for example a clip could easily be provided on the receptacle cover 12, which could then secure the receptacle cover 12 to the connector housing 24.

A further advantage of the present invention is that one-handed mating of the connector is possible, in conjunction with the self-aligning ability of the connector. The hinged receptacle cover 12 can be lifted up by one hand and the connector 10 lowered into position at the same time. Due to the self-aligning feature and magnetic elements, explained previously, the connector 10 locates and connects to the receptacle 11, the receptacle cover 12 then being magnetically held to the side of the connector housing 24.

## Claims

1. An electrical connection system comprising:
a harness having a connector provided at a first end; and
a receptacle arranged to accept the connector,
wherein a second end of the harness is arranged to be connected, in use, to electrical components on a vehicle seat; the receptacle is located, in use, on a vehicle body; and the harness is arranged, in use, to connect the vehicle seat to the vehicle body.

2. An electrical connection system according to claim 1, wherein the connector is a male and the receptacle is female.

3. An electrical connection system according to claim 1 or 2, wherein the receptacle has a hinged/removable cover.

4. An electrical connection system according to claim 3, wherein the hinged/removable cover is used to secure the harness to the receptacle.

5. An electrical connection system according to any previous claim, wherein the connector is provided with a clip, which holds the connector in place after mating with the receptacle.

6. An electrical connection system according to any preceding claim,
wherein the harness is covered by a protective material.

7. An electrical connection system according to claim 6, wherein the protective material covering the harness is round corrugated tube.

8. An electrical connection system according claim 6, wherein the protective material covering the harness is a flat corrugated tube.

9. An electrical connection system according to claim 6, wherein the protective material covering the harness is caterpillar-like tubing.

10. An electrical connection system according to any previous claim, wherein the connector mates with the receptacle magnetically.

11. An electrical connection system according to any previous claim, wherein the connector has means for self-aligning with the receptacle.

12. A vehicle comprising the electrical connection system of any preceding claim.
